# EUROPEAN PATENT APPLICATION

(11) **EP 4 815 386 A1**
(43) Date of publication of application: **30.09.2026**
(21) Application number: 24893859.9
(22) Date of filing: 26.09.2024
(51) Int. Cl.: H04L 41/045, H04L 67/02, H04Q 9/00

(54) **MANAGED DEVICE**

(30) Priority: 21.11.2023 JP 2023197257
(71) Applicant: Matsui Mfg. Co., Ltd., Osaka-shi Osaka 542-0012 (JP)
(72) Inventor: KATO, Koichi, Hirakata-shi, Osaka 573-1132 (JP)
(74) Representative: Vossius & Partner Patentanwälte Rechtsanwälte mbB
(86) International application number: PCT/JP2024/034359
(87) International publication number: WO 2025/109865

(57) **Abstract**

A managed device 1 to be provided in a local area network 4 including an access point accessible by a mobile information device 2 includes a server portion 13 that operates a Web application that displays a Web page 7 including at least one of a confirmation target item 15 and an operation target item 16 of the managed device using a Web browser 6 of the mobile information device, and a read portion 19 that includes URL information 18 that is generated based on a host name fixedly set in the managed device in advance so as to enable communication using a predetermined protocol that is searchable from a host name 17 in the local area network, the URL information being accessible to the Web page, the read portion 19 being readable by a reading function of the mobile information device.

## Description

### TECHNICAL FIELD

The present disclosure relates to a managed device, a device to be managed.

### BACKGROUND ART

Conventionally, a managed (operation) device such as a molding machine and a molding-related machine provided around the molding machine, and other machine tools in various factories is provided with a display portion, an operation portion, and the like. In place of the display portion of the managed device, in order to display a confirmation target item such as an operation state of the managed device and an operation target item such as various setting operation portions of the managed device on a mobile information device such as a smartphone, it is necessary to grasp or manage identification information such as an IP address of the managed device so as to be connectable via a network.

For example, Patent Document 1 below discloses a wireless operation system including: a plurality of controllers that control operations of a plurality of electric actuators; and a teaching device that performs input of teaching content relating to the operation of each electric actuator to each controller by wireless communication when an operation portion is operated. An SSID is set in advance in the controller. The teaching device includes an access point which enables wireless communication with the controller and in which the same SSID as in the controller is set in advance, and a DHCP server which automatically allots an IP address to the controller in a wireless communication area. The teaching device is configured to register the IP address of the controller as a wireless communication target if the response information transmitted from the controller is a preset character string.

### CITATION LIST

### PATENT LITERATURE

Patent Document 1: Japanese Unexamined Patent Application Publication No. 2022-169262

### SUMMARY OF INVENTION

### TECHNICAL PROBLEM

In the wireless operation system described in Patent Document 1, when an operator operates the operation portion of the teaching device, there is a need to select an electric actuator to be operated on the operation portion, and there is a concern that it becomes difficult to identify the actual machine of the electric actuator.

The present disclosure has been made in view of the above-described circumstances, and an object of the present disclosure is to provide a managed device capable of displaying at least one of a confirmation target item and an operation target item of the managed device on a mobile information device while the identification of the managed device to be a target is facilitated without requiring recognition, management, or the like of identification information of the managed device.

### SOLUTION TO PROBLEM

In order to achieve the above-mentioned object, Configuration 1 of a managed device according to the present disclosure is a managed device to be provided in a local area network including an access point accessible by a mobile information device, the managed device includes a server portion that operates a Web application that displays a Web page including at least one of a confirmation target item and an operation target item of the managed device using a Web browser of the mobile information device. The managed device also includes a read portion that includes URL information that is generated based on a host name fixedly set in the managed device in advance so as to enable communication using a predetermined protocol that is searchable from a host name in the local area network, the URL information being accessible to the Web page, the read portion being readable by a reading function of the mobile information device.

According to the following embodiments, it is disclosed that the managed device according to the present disclosure can include the following subordinate configurations.

### < Configuration 2 >

In the Configuration 1, the managed device can be connected to a network device including the access point.

### < Configuration 3 >

In the Configuration 1, the managed device can configure the access point.

### < Configuration 4 >

In any one of the Configurations 1 to 3, the read portion can be provided on an outer peripheral side of the managed device so as to be readable.

### < Configuration 5 >

In any one of the Configurations 1 to 4, the read portion can be a two-dimensional code.

### < Configuration 6 >

In any one of the Configurations 1 to 4, the read portion can be an NFC tag.

### < Configuration 7 >

In any one of the Configurations 1 to 6, the managed device can have a plurality of the read portions including URL information respectively accessible to different Web pages.

### < Configuration 8 >

In any one of the Configurations 1 to 7, the managed device can be a molding-related device installed in association with a molding machine.

### ADVANTAGEOUS EFFECT OF INVENTION

With the configurations described above, the managed device according to the present disclosure displays at least one of the confirmation target item and the operation target item of the managed device on the mobile information device without requiring recognition, management or the like of the identification information of the managed device while easily identifying the managed device to be managed.

### BRIEF DESCRIPTION OF DRAWINGS

FIG. 1 is a diagrammatic system view schematically showing an example of a communication system in which an example of the managed device according to an embodiment of the present disclosure is incorporated.
FIG. 2A is a diagrammatic flowchart schematically illustrating an example of a preset item of the managed device, and FIG. 2B is a table diagrammatically illustrating an example of a setting item of the managed device.
FIG. 3 is a schematic block diagram of the communication system.
FIG. 4A is a partially broken diagrammatic front view schematically showing an example of a read portion to be provided in the managed device, FIG. 4B is a partially broken diagrammatic front view schematically showing another example of the read portion, and FIG. 4C is a diagrammatic front view schematically showing an example of a Web page to be displayed on the mobile information device.
FIG. 5A is a partially broken diagrammatic front view schematically showing a read portion similar to FIG. 4A, FIG. 5B is a diagrammatic front view schematically showing a read portion similar to FIG. 4B, and FIG. 5C is a diagrammatic front view schematically showing another example of a Web page to be displayed on the mobile information device.
FIG. 6 is a diagrammatic system view schematically showing an example of a communication system incorporating an example of a modification of the managed device.

### DESCRIPTION OF EMBODIMENTS

Hereinafter, an embodiment of the present disclosure will be described with reference to the drawings.

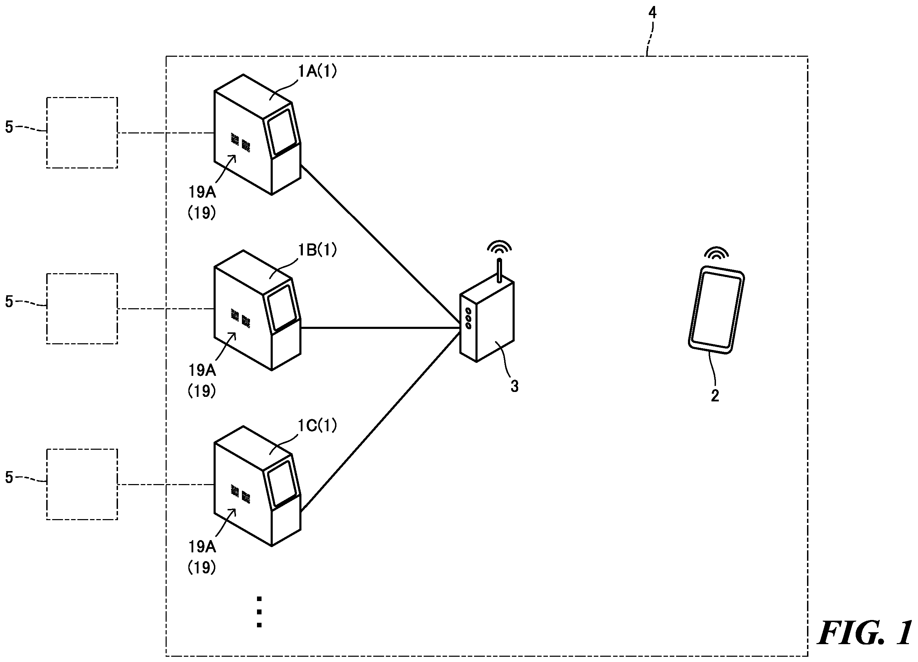

In drawings, some of the detailed reference numerals attached in the other figures are omitted. In FIG. 1, FIG. 3, and FIG. 6, electrical connection and communication connection are schematically illustrated by a solid line or a two-dot chain line.

FIG. 1 to FIG. 6 are schematic diagrams for explaining an example and a modification of the managed device according to the embodiment, and an example of a communication system in which the managed devices are incorporated.

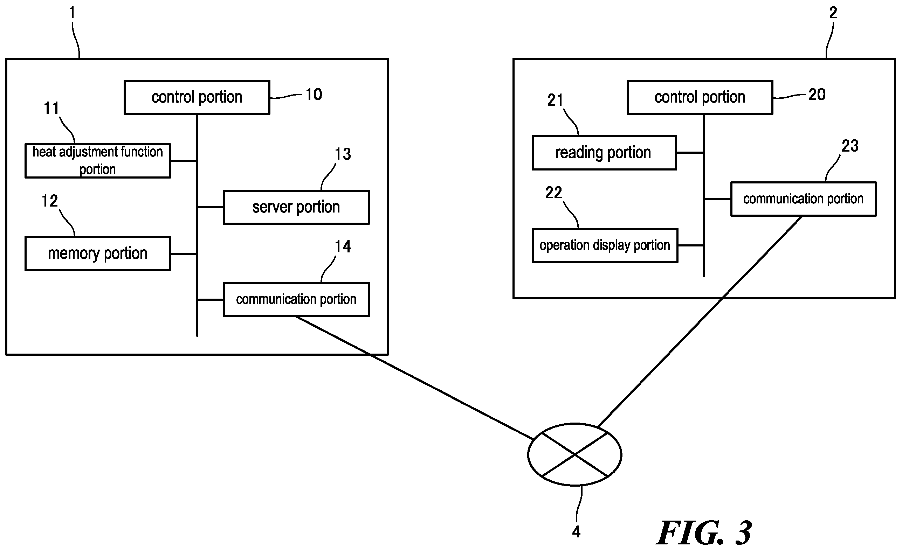

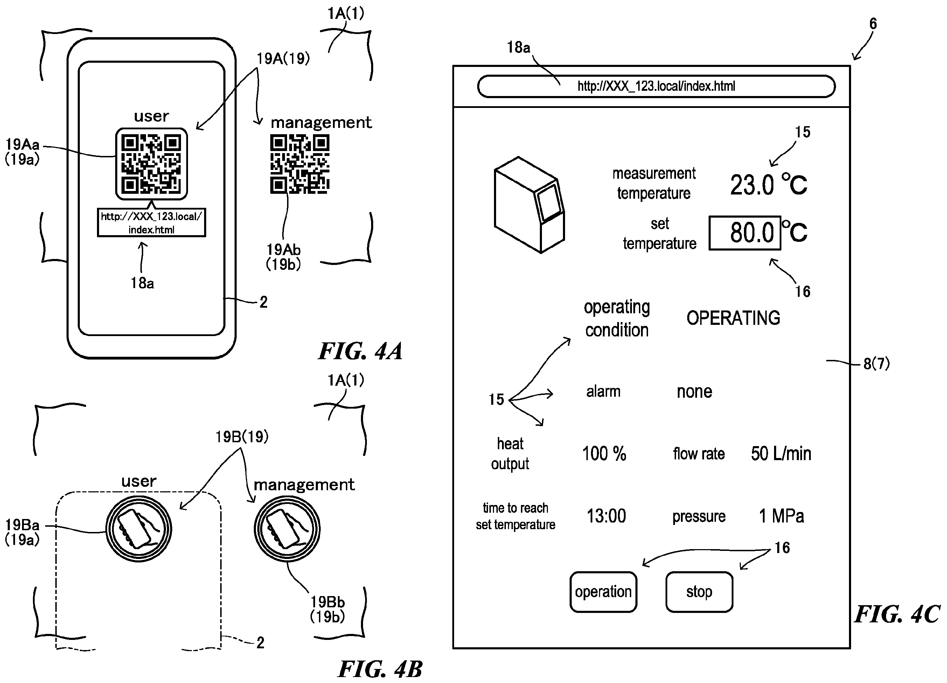

As shown in FIG. 1, a managed device 1 according to the embodiment is provided in a local area network (LAN) 4 including an access point accessible by a mobile information device 2. As illustrated in FIG. 3 and FIG. 4C, the managed device 1 includes a server portion 13 that operates a Web application that displays a Web page 7 by a Web browser 6 of the mobile information device 2, the Web page 7 including at least one of a confirmation target item 15 and an operation target item 16 of the managed device 1. As illustrated in FIG. 4A, the managed device 1 includes a read portion 19 that includes URL (Uniform Resource Locator) information 18 that enables access to the Web page 7 and is read by a reading function of the mobile information device 2.

With the configuration as described above, by reading the read portion 19 of the managed device 1 by the reading function of the mobile information device 2, it is able to browse the Web page 7 including at least one of the confirmation target item 15 and the operation target item 16 of the managed device 1 on the mobile information device 2. Since the Web page 7 is displayed by the Web application of the server portion 13 provided in the managed device 1, it is not necessary to install a dedicated application (app) or the like in the mobile information device 2 in advance. In addition, since the read portion 19 is provided in the managed device 1, it is easy to identify the managed device 1 that is a management target (a confirmation target or an operation target), it is not necessary to select the managed device 1 from the list or the like of devices connected to the LAN 4, thereby suppressing erroneous recognition or the like of the managed device 1.

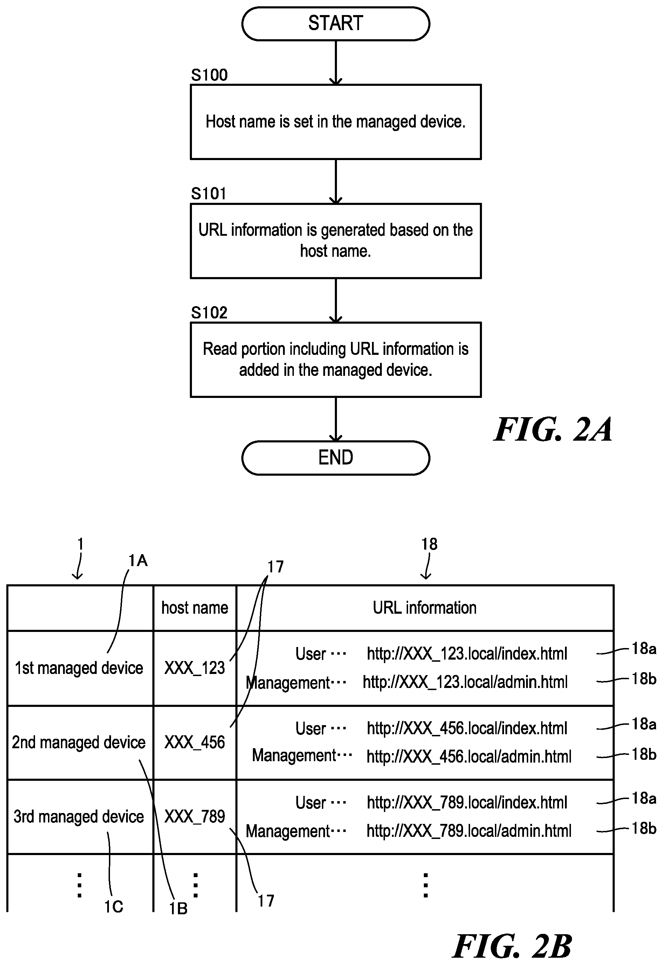

The URL information 18 included in the read portion 19 is generated based on the host name 17 fixedly set in the managed device 1 in advance so as to enable communication using a predetermined protocol that is able to be searched from the host name 17 (referring to FIG. 2B) in the LAN 4. With such a configuration, since the URL information 18 generated based on the fixed host name 17 is included in the read portion 19, it is not necessary for a user operating the mobile information device 2 to grasp or manage identification information such as the IP address of the managed device 1. In addition, for example, in a case where it is assumed that the name solution is performed by the DNS server, it is necessary to set complicated network setting; in a case where the URL information including the identification information is allocated after the LAN is connected, it is necessary to perform generation, setting, rewriting, or the like of the read portion after the LAN is connected; however, such requirement is not necessary in such a configuration of the embodiment. Thus, for example, even when the managed device 1 is newly installed or added in the LAN 4 of a factory or the like, it is able to easily browse the Web page 7 including at least one of the confirmation target item 15 and the operation target item 16 by the mobile information device 2 without requiring a complicated network setting or the like. In addition, since the Web page 7 including at least one of the confirmation target item 15 and the operation target item 16 is browsed on the mobile information device 2 in this manner, a configuration in which a display portion or the like is not provided in the managed device 1 is adopted or a configuration in which only a simple display function is provided is adopted.

In the embodiment, the managed device 1 is provided with a plurality of read portions 19a and 19b including URL information 18a and 18b that respectively enable access to different Web pages 7 (8 and 9). With such a configuration, different Web pages such as the user Web page 8 and the management Web page 9 are accessed quickly. As will be described in detail later, in the embodiment, the managed device 1 is provided with the user read portion 19a that enables access to the user Web page 8, and the management read portion 19b that enables access to the management Web page 9.

In the example of FIG. 1, the managed device 1 is connected to the network device 3 constituting the access point.

The network device 3 constructs the LAN 4 with the managed device 1, the mobile information device 2, and the like, and configures a communication system with the managed device 1, the mobile information device 2, and the like. The network device 3 configures an access point so that the mobile information device 2 is connectable to the LAN 4 by wireless LAN. The network device 3 can be, for example, a wireless LAN router, or the like having a hub function and an access point function. Such a network device 3 can further include an ONU (Optical Network Unit), a modem, or the like. The network device 3 is not limited to such a network outside the LAN 4 or a configuration connectable to the Internet, and can be a hub, a switch, or the like having an access point function, or can have various configurations.

The network device 3 is provided with a plurality of connection portions (LAN ports) to which a LAN cable or the like connected to the managed device 1 is connected. FIG. 1 shows an example in which a plurality of (three in the figure) managed devices 1, 1, and 1 (the first managed device 1A, the second managed device 1B, and the third managed device 1C) are connected to the network device 3. Since the plurality of managed devices 1, 1, and 1 have the same configuration, the managed device 1 is exemplified below when no distinction is required. The number of managed devices 1 connected to the network device 3 is not limited to three, and can be one, two, four or more. The managed device 1 provided in the LAN 4 is not limited to the same type, and can be various types.

The managed device 1 can be a molding-related device installed in association with the molding machine. With such a configuration, the managed device 1 is easily identified in a molding factory in which a plurality of models of similar appearance are often installed. Further, since addition, replacement, or the like of the molding-related apparatus is relatively frequently performed in the molding factory, it is suitable as the managed device 1 to be installed in the molding factory.

The managed device 1 is a mold temperature adjustment device that circulates a temperature adjustment medium in a medium flow path of a mold 5 to be incorporated in a molding machine. As illustrated in FIG. 3, the managed device 1 is provided with a temperature adjustment function portion 11 that adjusts the temperature of the temperature adjustment medium. The temperature adjustment function portion 11 can include a pump that is disposed in a circulation path to be connected to an inlet and an outlet of the medium flow path of the mold 5 and circulates the temperature adjustment medium, a temperature sensor that detects the temperature of the mold 5, the temperature of the temperature adjustment medium, or the like, various sensors that detect the flow rate and pressure of the temperature adjustment medium, a heat exchanger that adjusts the temperature adjustment medium to a preset temperature, or the like. The managed device 1 is not limited to a mold temperature adjustment device including such a temperature adjustment function portion 11, and can be a device for transporting a molding material, a device for drying a molding material, a device for blending a molding device, or the like, or can be another molding-related device. In addition, the managed device 1 is not limited to the molding-related device, and can be a processing machine installed in various processing factories or other factories, or a device to be installed in relation to a processing machine, or can be various devices.

The managed device 1 includes: a control portion 10 that controls the temperature adjustment function portion 11 and the server portion 13 connected via a signal line or the like; and a storage portion 12 that stores various programs such as a control program, various preset operation conditions, various data tables, or the like, and that is constituted with various memories such as a ROM and a RAM. The control portion 10 can include a control circuit such as a CPU (Central Processing Portion) or an MCU. The managed device 1 is provided with a communication portion 14 that is connected to the control portion 10 via a signal line or the like and is controlled by the control portion 10.

The communication portion 14 is connected to the LAN 4 via the network device 3, and includes a transmission portion, a reception portion, and the like that enable data transmission and reception between the managed device 1 and the mobile information device 2. The communication portion 14 communicates with the mobile information device 2 by a predefined protocol that is able to search from the host name, and has a function of responding to a search using the host name from the mobile information device 2. The communication portion 14 can be connected to the network device 3 via a LAN cable or the like. The communication portion 14 can be connected to the network device 3 in accordance with a wired communication standard such as the Ethernet (registered trademark). The managed device 1 can be connected to the LAN 4 by wireless LAN instead of a configuration in which the managed device 1 is connected to the LAN 4 by a wired LAN.

The server portion 13 operates a Web application that makes the mobile information device 2 display the Web page 7 using the Web browser 6. The server portion 13 is suitably configured to enable transmission and reception of files and data constituting the Web page 7 in response to the request from the mobile information device 2 via the Web browser 6. The file transmitted by the server portion 13 to the mobile information device 2 can be a static file stored in the server portion 13, or can be a dynamic file generated by the server portion 13 in response to the request from the mobile information device 2.

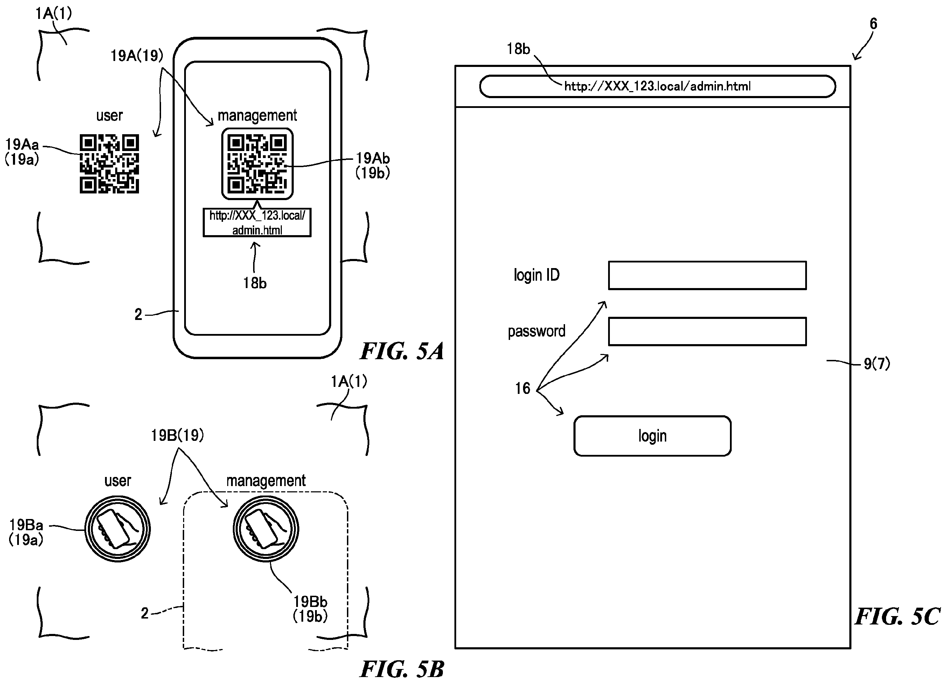

In the embodiment, the server portion 13 stores an index.html file constituting the user Web page 8 and an admin.html file constituting the management Web page 9 as a file constituting the Web page 7, referring to FIG. 4C and FIG. 5C. In the server portion 13, an HTML file constituting another Web page 7 can be stored, and other files constituting the Web page 7 such as a CSS file or a JavaScript (registered trademark) file can be stored.

The confirmation target item 15 to be displayed on the Web page 7 can be various items to be required for management of the managed device 1, operation condition including the status of ON (operation) or OFF (stop) of the managed device 1, measurement values by various sensors, a setting value, or the like. Such a confirmation target item 15 can include dynamic data, and in this case, the server portion 13 can transmit the dynamic data periodically or every time the dynamic data fluctuates, or can transmit the dynamic data to the mobile information device 2 according to an update operation or the like of the mobile information device 2.

The example of FIG. 4C shows the measurement temperature and the driving situation of the mold 5, the presence or absence of an alarm notifying the occurrence of an abnormality, the output of a heating portion (heater) constituting the heat exchanger, the flow rate and the pressure of the temperature adjustment medium, the time until the temperature reaches a predetermined value, or the like on the user Web page 8 as the confirmation target item 15. These can be data acquired by the above-described temperature adjustment function portion 11, or can be data calculated based on the acquired data. The confirmation target item 15 is not limited to the above-mentioned dynamic data, can be data stored in advance in the storage portion 12, or the like, and can be a suitable item according to the function or the like of the managed device 1.

The operation target item 16 to be displayed on the Web page 7 can be various items to be required for management of the managed device 1, and ON (operation), OFF (stop) of the managed device 1, various setting values, information required for login authentication, or the like. The operation target item 16 can be input and operated on the Web browser 6 of the mobile information device 2. In the Web application that is operated by the server portion 13, when the input or operation of the operation target item 16 is performed on the Web browser 6 of the mobile information device 2, the operation corresponding to such input or operation is performed in the managed device 1.

FIG. 4C shows an example in which the target set temperature change operation portion of the mold 5, the ON (operation) portion, the OFF (stop) portion, and the like are displayed as the operation target item 16 on the user Web page 8. The target set temperature is also the confirmation target item 15 in which the changed temperature is displayed.

FIG. 5C shows an example in which, as the operation target item 16, an input form of a login ID and a password constituting information required for login authentication of the user (administrator) and a login button are displayed on the management Web page 9.

The operation target item 16 is not limited to the items illustrated in FIG. 4C and FIG. 5C, and can be any suitable item according to the function or the like of the managed device 1. Further, the embodiment is not limited to such that the confirmation target item 15 and the operation target item 16 are shown on a single Web page 7 as illustrated in FIG. 4C and FIG. 5C; and a part of or all of the confirmation target item 15 and the operation target item 16 can be switched and displayed, for example, by switching operation to another page. Further, when a plurality of managed devices 1 are provided in the LAN 4 like the example in FIG. 1, the Web page 7 including the confirmation target item 15 and the operation target item 16 of each of the plurality of managed devices 1 can be displayed. In this case, the Web page 7 including the confirmation target item 15 and the operation target item 16 of each managed device 1 can be switched and displayed in each tab (Web page 7) using the tab function or the like of the Web browser 6 of the mobile information device 2.

When the operation display portion is provided in the managed device 1, all or a part of the confirmation target item 15 and the operation target item 16 as described above can also be displayed on the operation display portion of the managed device 1. In this case, when the input and operation are performed in the operation display portion of the managed device 1, the target set temperature or the like in the user Web page 8 is also changed. When the input and operation are performed on the user Web page 8 displayed on the Web browser 6 of the mobile information device 2, the target set temperature or the like of the operation display portion of the managed device 1 is also changed. In addition, when the Web browser 6 of the mobile information device 2 is able to display the Web page 7 including the confirmation target items 15 and the operation target items 16 of the plurality of managed devices 1 as described above, the managed device 1 displayed as the management target on the Web browser 6 of the mobile information device 2 can be notified in order to facilitate identification. For example, confirmation data or the like can be transmitted from the mobile information device 2 to the managed device 1 and a display portion or the like of the managed device 1 can be lighted or blinked in a suitable manner, or a specific number or the like transmitted from the mobile information device 2 can be displayed.

The read portion 19 is provided so as to be readable on the outer peripheral side of the managed device 1 (refer to FIG. 1). With such a configuration, the read portion 19 is easily read using the mobile information device 2.

The read portion 19 can be provided in the managed device 1 in advance before shipment or installation or the like of the managed device 1 as follows.

For example, as illustrated in FIG. 2A and FIG. 2B, first, the host name 17 is set to the managed device 1 (step S100). The host name 17 can be set so as not to overlap with the host name 17 of another managed device 1 in the same LAN 4. Preferably, the host name 17 can be specifically set to each of the managed devices 1. For example, the host name 17 can include a model name and a serial number uniquely defined for each managed device 1 by the manufacturer of the managed device 1. With such a configuration, even when the managed device 1 is installed in any LAN 4, there is no concern that the host name 17 overlaps with the host name 17 of another managed device 1 when the managed device 1 is added to or replaced in the LAN 4. The information including such a host name 17 is stored in the managed device 1 in such a manner that communication using a technically predetermined protocol to be described later is performed.

In the example in the figures, the host name 17 of the first managed device 1A is "XXX_123", the host name 17 of the second managed device 1B is "XXX_456", and the host name 17 of the third managed device 1C is "XXX_789".

Next, the URL information 18 is generated based on the host name 17 set as described above (step S101).

The URL information 18 is generated so as to be able to perform communication using a predetermined protocol that is able to be searched from the host name 17 in the LAN 4. The predetermined protocol can be an mDNS (Multicast Domain Name System). The managed device 1 and the mobile information device 2 are configured to be compatible with a search protocol such as an mDNS. According to the mDNS protocol, if the device (mobile information device 2), an inquirer, multicasts information including the host name 17 in the LAN 4, the device (managed device 1) matching the host name 17 responds with information including the IP address, so that two-way communication is achieved. For example, in case that search is scheduled to be performed from the host name 17 when the top level domain is "local" in the mDNS, the domain name included in the URL information 18 can be set to "local" to be described later. The IP address can be automatically allocated by a DHCP (Dynamic Host Configuration Protocol) server provided in the LAN 4 or a DHCP function provided in the network device 3. The mDNS can be an application such as Bonjour (registered trademark) or Avahi or the like, and the predetermined protocol is not limited to the mDNS, and can be another protocol such as an LLMNR (Link-local Multicast Name Resolution).

In the example of FIG. 2B, the generated URL information 18 is shown with items such as a scheme name (http:) representing a communication protocol, a host name (each host name 17 described above), a domain name (local), and a directory and a file name (index.html or admin.html). The communication protocol is not limited to HTTP and can be HTTPS.

More specifically, the figure shows an example in which the user URL information 18a of the first managed device 1A is "http://XXX_123.local/index.html", and the management URL information 18b of the first managed device 1A is "http://XXX_123.local/admin.html". In addition, the figure shows an example in which the user URL information 18a of the second managed device 1B is "http://XXX_456.local/index.html", and the management URL information 18b of the second managed device 1B is "http://XXX_456.local/admin.html". In addition, the figure shows an example in which the user URL information 18a of the third managed device 1C is "http://XXX_789.local/index.html", and the management URL information 18b of the third managed device 1C is "http://XXX_789.local/admin.html".

Next, the read portion 19 including the URL information 18 generated as described above is added to the managed device 1 (step S102).

As illustrated in FIG. 4A and FIG. 5A, the read portion 19 can be a two-dimensional code 19A. With such a configuration, the two-dimensional code 19A is easily read using an application installed in advance in the mobile information device 2 or a general-purpose application, and a dedicated reading application or the like becomes unnecessary.

Specifically, as illustrated in FIG. 1, the two-dimensional code 19A constituting the read portion 19 can be provided on one side surface or the like constituting the outer peripheral surface of the housing (casing) of the managed device 1.

In the example of FIG. 4A and FIG. 5A, as a plurality of read portions 19a and 19b, a user two-dimensional code 19Aa including the user URL information 18a accessible to the user Web page 8 and a management two-dimensional code 19Ab including the management URL information 18b accessible to the management Web page 9 are provided. Although the user two-dimensional code 19Aa and the management two-dimensional code 19Ab are provided at relatively close positions in the figure, the user two-dimensional code 19Aa and the management two-dimensional code 19Ab can be provided at separate positions. For example, a configuration can be adopted in which the user two-dimensional code 19Aa is provided at an easily noticeable position and the management two-dimensional code 19Ab is provided at a position that is less noticeable. In this case, the management two-dimensional code 19Ab can be provided not in a position that is readable on the outer peripheral side of the managed device 1, but in a suitable position such as the inside of the maintenance door.

In addition, the user two-dimensional code 19Aa and the management two-dimensional code 19Ab are attached with the characters of the "user" and the "management" in the respective surroundings (the upper side in the figure) so as to be recognized that the user two-dimensional code 19Aa and the management two-dimensional code 19Ab are for the user and for the management, respectively. These characters, the user two-dimensional code 19Aa, and the management two-dimensional code 19Ab can be directly printed on the outer peripheral surface of the housing of the managed device 1, or can be printed on a sticker (label) or the like to be attached to the outer peripheral surface of the housing of the managed device 1.

As the user two-dimensional code 19Aa and the management two-dimensional code 19Ab, the user URL information 18a included in the user two-dimensional code 19Aa and the management URL information 18b included in the management two-dimensional code 19Ab are only required such that the mobile information device 2 is able to read the user URL information 18a and the management URL information 18b; the figure shows an example in which the user two-dimensional code 19Aa and the management two-dimensional code 19Ab are QR codes (registered trademark).

The user two-dimensional code 19Aa including the user URL information 18a and the management two-dimensional code 19Ab including the management URL information 18b can be generated using a suitable general-purpose two-dimensional code generation application or the like.

In place of the above-mentioned embodiment, the read portion 19 can be an NFC (Near Field Communication) tag 19B as illustrated in FIG. 4B and FIG. 5B. With such a configuration, the NFC tag 19B is easily read using an NFC tag reader constituting a reading portion 21 provided in advance in the mobile information device 2, and a dedicated reader or the like becomes unnecessary. In addition, compared to a configuration in which the read portion 19 is the two-dimensional code 19A, the read portion 19 constituted with the NFC tag 19B is less likely to be affected by contamination due to dust or the like.

Similarly, the NFC tag 19B constituting the read portion 19 can be provided on one side surface or the like constituting the outer peripheral surface of the housing of the managed device 1.

FIG. 4B and FIG. 5B show, as described above, an example in which as a user NFC tag 19Ba including the user URL information 18a and a management NFC tag 19Bb including the management URL information 18b are provided as a plurality of read portions 19a and 19b. In the example, as described above, the user NFC tag 19Ba and the management NFC tag 19Bb are provided at relatively close positions; however, the user NFC tag 19Ba and the management NFC tag 19Bb can be provided at separate positions.

In addition, the figure shows that a picture (pictogram) is provided as a mark for making the mobile information device 2 close to each of the user NFC tag 19Ba and the management NFC tag 19Bb. Similarly, the user NFC tag 19Ba and the management NFC tag 19Bb are attached with the characters, "user" and "management", in the respective surroundings (upper side in the figure) so as to be recognized that the user NFC tag 19Ba and the management NFC tag 19Bb are respectively for the user and the management. Similarly, these characters and pictures can be printed directly on the outer peripheral surface of the housing of the managed device 1, or can be printed on a sticker (label) or the like to be attached to the outer peripheral surface of the housing of the managed device 1.

The user NFC tag 19Ba and the management NFC tag 19Bb can be embedded in a sticker (label) or the like and attached to an outer peripheral surface or an inner peripheral surface of the housing of the managed device 1.

The user URL information 18a, the management URL information 18b, or the like can be written to the user NFC tag 19Ba and the management NFC tag 19Bb using a suitable general-purpose NFC tag writing application or the like.

The read portion 19 to be added to the managed device 1 is not limited to the two-dimensional code 19A and the NFC tag 19B as described above, and can be other read portions as long as the read portion 19 is readable using the reading function of the mobile information device 2.

The mobile information device 2 can be a portable computer, and can be a smartphone, a tablet device, a notebook computer, or the like.

As illustrated in FIG. 3, the mobile information device 2 is provided with the reading portion 21 capable of reading the read portion 19 provided in the managed device 1. The reading portion 21 is required to have a reading function corresponding to the read portion 19 described above. When the read portion 19 is the two-dimensional code 19A, the reading portion 21 can be a camera that is typically mounted on the mobile information device 2 or a general-purpose two-dimensional code reader. When the read portion 19 is the NFC tag 19B, the reading portion 21 can be an NFC tag reader that is typically mounted on the mobile information device 2.

The mobile information device 2 has an operation display portion 22 that shows the Web page 7 to be operated. The operation display portion 22 can be a touch panel such as a capacitance type integrated with a display, or can be configured such that the operation portion and the display portion are in separate devices, for example, the operation display portion 22 can be configured with a display and an input device such as a mouse, and a keyboard.

The mobile information device 2 is provided with a communication portion 23 that is wirelessly connected to the LAN 4 via an access point of the network device 3, and that includes a transmission portion, a reception portion, or the like that enable data transmission and reception between the mobile information device 2 and the managed device 1. The communication portion 23 is able to communicate with the managed device 1 by a predefined protocol being able to search from the host name 17 as described above, and has a function of searching and communicating with the managed device 1 having a specific host name 17 in the LAN 4. The communication portion 23 can be connected to the network device 3 in accordance with a wireless communication standard such as Wi-Fi.

The mobile information device 2 is provided with a control portion 20 that controls the reading portion 21, the operation display portion 22, and the communication portion 23 described above. Like the control portion 10 of the managed device 1, the control portion 20 includes a control circuit such as a CPU (Control Processing Unit), a microcomputer (MCU) including various memories such as a ROM and a RAM, or the like, and is connected to each portion constituting the mobile information device 2 via a signal line or the like.

In the communication system as described above, when the reading portion 21 of the mobile information device 2 is used to read the read portion 19 provided in the managed device 1, the information including the host name 17 is multicast based on the URL information 18 according to the predetermined protocol as described above. The managed device 1 matching the host name 17 enables two-way communication by responding with information including the IP address, the Web browser 6 is activated in the operation display portion 22 of the mobile information device 2, the Web page 7 is displayed on the basis of data such as a file transmitted from the server portion 13 of the managed device 1, and confirmation and operation of the confirmation target item 15 and the operation target item 16 of the corresponding managed device 1 are performed. For example, as illustrated in FIG. 4A and FIG. 4B, when the reading portion 21 of the mobile information device 2 is used to read the user read portion 19a (the user two-dimensional code 19Aa or the user NFC tag 19Ba), the user Web page 8 is displayed on the Web browser 6 as illustrated in FIG. 4C. Further, for example, as illustrated in FIG. 5A and FIG. 5B, when the management reading portion 19b (the management two-dimensional code 19Ab or the management NFC tag 19Bb) is read using the reading portion 21 of the mobile information device 2, the management Web page 9 is displayed on the Web browser 6 as illustrated in FIG. 5C.

The URL information 18 of the managed device 1 read by the reading portion 21 of the mobile information device 2 can be stored in the mobile information device 2. With such a configuration, it is not necessary to read the read portion 19 provided in the managed device 1 using the reading portion 21 of the mobile information device 2 each time the Web page 7 is accessed. In this case, the URL information 18 of the managed device 1 can be registered by a bookmark function or the like of the Web browser 6 of the mobile information device 2. Accordingly, the Web page 7 of the managed device 1 is easily accessed.

The Web page 7 is not limited to the user Web page 8 and the management Web page 9 as described above, and can be various Web pages 7. In addition, the example described above shows that both the confirmation target item 15 and the operation target item 16 or only the operation target item 16 is displayed on the Web page 7, but only the confirmation target item 15 can be displayed.

Further, in the above-described example, two read portions 19a and 19b are provided in the managed device 1, but three or more read portions can be provided, or one read portion can be provided.

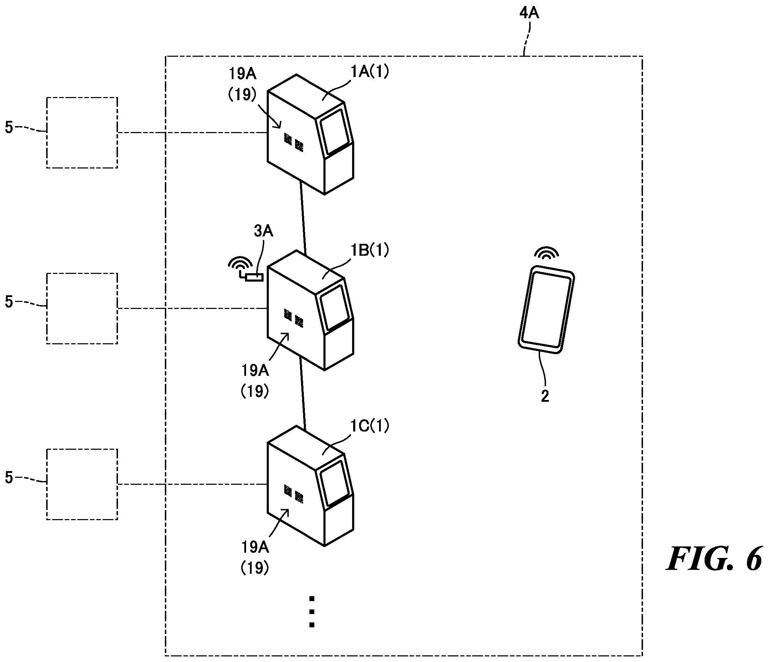

Next, a modification of the managed device will be described with reference to FIG. 6.

In the following modifications, differences from the examples described above will be mainly described, and the description of similar configuration will be omitted or simplified. Further, in the following modified examples, description of the functions and effects which are the same as those in the above-described example will be omitted or simplified.

In the modification, the managed device 1 (1B) constitutes an access point (3A). With such a configuration, it is not necessary to separately install the network device 3 constituting the access point, and a LAN 4A is constructed by the managed device 1 (1B). As in the example in the figure, the wireless LAN adapter 3A constituting the access point is provided in the managed device 1 (in the figure, the second managed device 1B) of a plurality of managed devices 1, 1, and 1 provided in the LAN 4A. Like the network device 3 described above, the wireless LAN adapter 3A can have a hub function and an access point function like the above-mentioned network device 3, can be connectable to another network outside the LAN 4A or the Internet, or can have various configurations. In the example in the figure, other managed devices 1 and 1 are connected to the second managed device 1B via a LAN cable or the like, among a plurality of managed devices 1, 1, and 1, the second managed device 1B being connected with the wireless LAN adapter 3A.

In each of the examples described above, a molding machine or a processing machine having a display portion which is able to activate a suitable Web browser can be connected to the network device 3 or the wireless LAN adapter 3A via a LAN cable or the like. In this case, the URL information 18 read by the mobile information device 2 can be input or transmitted to the molding machine or the processing machine, and the Web page 7 can be displayed on the display portion of the molding machine or the processing machine. With such a configuration, centralized management of the managed device 1 in the molding machine or the processing machine is executed.

The configuration of each member and each portion constituting the managed device 1 and the communication system including the managed device 1 is merely an example, and various modifications can be made.

### REFERENCE SIGNS LIST

- 1: managed device
- 13: server portion
- 15: confirmation target item
- 16: operation target item
- 17: host name
- 18: URL information
- 19: read portion
- 19A: two-dimensional code
- 19B: NFC tag
- 2: mobile information device
- 3: network device (access point)
- 3A: wireless LAN adapter (access point)
- 4, 4A: LAN (local area network)
- 6: Web browser
- 7: Web page

## Claims

1. A managed device to be provided in a local area network including an access point accessible by a mobile information device, the managed device comprising:
a server portion that operates a Web application that displays a Web page including at least one of a confirmation target item and an operation target item of the managed device using a Web browser of the mobile information device; and
a read portion that includes URL information that is generated based on a host name fixedly set in the managed device in advance so as to enable communication using a predetermined protocol that is searchable from a host name in the local area network, the URL information being accessible to the Web page, the read portion being readable by a reading function of the mobile information device.

2. The managed device according to claim 1,
wherein the managed device is connected to a network device comprising the access point.

3. The managed device according to claim 1,
wherein the managed device comprises the access point.

4. The managed device according to any one of claims 1 to 3,
wherein the read portion is provided on an outer peripheral side of the managed device so as to be readable.

5. The managed device according to any one of claims 1 to 4,
wherein the read portion is a two-dimensional code.

6. The managed device according to any one of claims 1 to 4,
wherein the read portion is an NFC tag.

7. The managed device according to any one of claims 1 to 6,
wherein the managed device has a plurality of the read portions including URL information respectively accessible to different Web pages.

8. The managed device according to any one of claims 1 to 7,
wherein the managed device is a molding-related device installed in association with a molding machine.
